# EUROPEAN PATENT APPLICATION

(11) **EP 3 683 067 A1**
(43) Date of publication of application: **22.07.2020**
(21) Application number: 19152429.7
(22) Date of filing: 18.01.2019
(51) Int. Cl.: B60B 3/04, B60B 3/10, B60B 5/02

(54) **HYBRID WHEEL AND METHOD FOR ITS PRODUCTION**

(71) Applicant: GMT GmbH, 40549 Düsseldorf (DE)
(72) Inventor: SHIRATORI, Kohji, 40549 Düsseldorf (DE)
(74) Representative: Gille Hrabal

(57) **Abstract**

The present invention relates to a hybrid wheel (1), comprising a rim (2) and a spoke structure (3) connected thereto, whereby the rim (2) is made out of a fibre reinforced plastic material and the spoke structure (3) is made out of a metal. The rim is formed from the fibre reinforced plastic material by injection molding.

The present invention is also directed to a method for producing a hybrid wheel.

## Description

The present invention relates to a hybrid wheel and method for the production of a hybrid wheel. Moreover, the present invention relates to the use of the hybrid wheel in the automotive sector.

A hybrid wheel in the sense of the present invention is a wheel used for vehicles, such as automobiles and lorries, which is made out of two different materials, whereby the rim of the hybrid wheel is made out of a plastic material and the spoke structure is made out of a metal. Such hybrid wheels have the advantage of being more lightweight as wheels fully made of metal. Beside this weight reduction, hybrid wheels have the advantage of an improved driving performance. Starting from this technical background, the metals used in wheels are partially or fully replaced by more lightweight materials, under the social demand for energy saving and for Electric automobiles.

Metal has an advantage of toughness against cracking by the shock of stones from outside while driving as compared with any plastic material. Fiber reinforced plastic which has enough strength and durability while driving has much less weight than metal. Metal can be used outside as spoke (disc) and the fiber reinforced plastic can be used inside as rim covered by the tire. Thus, spoke by metal and rim by fiber reinforced plastic is the best combination for light weight wheel as hybrid wheel.

JP 2016/37061 A relates to a wheel which is fully composed of a metal material. In the wheel described a synthetic resin is used to reinforce the spoke structure which is also called disk. This wheel has the disadvantage that the resulting wheel is slightly heavy and that the synthetic resin cannot attributed by reducing the weight of the wheel.

JP 2018/69903 A discloses a hybrid wheel which is composed of a metal spoke structure and a rim being prepared from a carbon fibre reinforced plastic material. The rim is produced by the PREPREG technology (hard-pressing or autoclave technique) which is both expensive and time-consuming because of several process steps which are necessary to form the rim (shape forming, clipping and hardening). To fix the rim and the spoke structure, a flat screw is provided between the rim and the spoke structure to avoid moisture and/or dirt at the interface.

WO 2013/0683729 A relates to a wheel, comprising a rim and thereto connected a spoke structure made out of a fibre reinforced plastic material and an insert, which is embedded in the fibre reinforced structure at the centre of the spoke structure. This wheel has the disadvantage that the spoke structure being prepared from the reinforced plastic material can only be prepared by curing the plastic material at elevated temperature. The prepregs are usually processed with the hot-pressing technique or the autoclave technique which are both expensive and time-consuming,

US 2017/0361646 A relates to a hybrid wheel, comprising a unitary lug structure having a mount face and a dish section extending from the mount face; a wheel structure comprised of a high strength polymer encapsulating a portion of the lug structure dish section and extending from the lug structure, whereby the wheel structure having an inner rim section and an outer rim section. Accordingly, the polymer material is only provided in a small inner part of the rim. This wheel has the disadvantage that the resulting wheel is slightly heavy and that the synthetic resin cannot attributed by reducing the weight of the wheel.

DE 10 2011 077 834 A discloses a method which involves performing a transfer molding or injection molding into a semi-finished product that is inserted into mold cavities of an injection molding tool to produce a fiber-composite structural component. The semi-finished product is comprised of a long fibre in a form a semi-finished band for a reinforcement of an annular portion (rim), and individual radial sections (spokes). The injection molding tool is closed after insertion of the fiber-reinforced plastic, where the semi-finished product is embedded in the mold cavities. The method according to this prior art has the disadvantage that the preparation of the wheel is highly expensive and complicated. By long fiber, it is not possible to use in actual standard injection molding.

Starting from this prior art reference, it is the object of the present invention to provide a hybrid wheel which has practical connection between metal and fiber-reinforced plastic because the prior art has not yet provided enough solutions for this connection and, at the same time, avoiding corrosion, separation and pulling out under heavy pressure at driving. Moreover, the hybrid wheel should be relatively cheap and quick to produce with an attractive appearance and a sufficient stability.

Moreover, the connection of the rim and the spoke structure has to be improved by additional fixing means which are usually bolts. The fixation of bolts in a rim composed of a reinforced fibre plastic material requires cutting and/or drilling of holes into the plastic material which usually leads to damages of the plastic material.

The object of the present invention is solved by a hybrid wheel, comprising a rim and a spoke structure connected thereto, whereby the rim is made out of a fibre reinforced plastic material and the spoke structure is made out of a metal.

The hybrid wheel according to the present invention is characterized in that the rim is formed from the fibre reinforced plastic material by injection molding. The injection molding technology allows a precise production of the rim structure along with complex bolt holes which function is described later. Moreover, the injection molding is also of an advantage in case bolts as fixing means between the rim and spoke structure are provided which is also described later. Furthermore, the injection molding technology allows the production of a lightweight hybrid wheel along with a high production efficiency. Finally, the injection molding technology allows the production of a hybrid wheel without using a glue between the rim and the spoke structure which renders the present invention easier to be carried out.

Thus, according to the present invention the hybrid wheel is composed of at least two different material, whereby one material is used for the preparation of the rim (rim structure) and the other material is used for the preparation of the spoke structure (disk). Both materials, the fibre reinforced plastic material of the rim and the metal of the spoke structure, can be combined by two different methods which are explained in the following as the first mode and the second mode.

In the first mode, the rim being prepared from the fibre reinforced plastic material is directly applied by the injection molding technique to the spoke structure of the metal material.

In the first mode, the rim and the spoke structure are positively connected to each without any glue other so that no materials, such as dirt or moisture, can penetrate between the rim and the spoke structure which might have adverse effect on the long-term stability of the wheel.

In the second mode, the rim being prepared out of the fibre reinforced plastic material by injection molding can be mounted to the spoke structure in a separate assembly step after both elements are prepared separately.

### [Rim structure]

In the hybrid wheel according to the present invention, the rim has a substantially cylindrical shape in a first embodiment.

In this embodiment, one end of the cylindrical shape of the rim is fixed and connected with the spoke structure. Thereby, it is preferred that the extension of the rim increases into the direction of the spoke structure, so that a stable fixation between the rim and the spoke structure becomes possible.

In a second embodiment, the rim exhibits a stepped structure in the boundary of the spoke structure with an in-creasing extension into the direction of the spoke structure which once again allows a stable fixation of the rim to the spoke structure.

In order to allow a stable fixation of the rim to the spoke structure, the extension of the rim at the interface of the rim to the spoke structure (3) is essentially the same as the extension of the spoke structure at the interface of the rim to the spoke structure. The positively and flush assembly allows a stable fixation between the rim and the spoke structure.

In a preferred embodiment of the present invention, the hybrid wheel exhibits a concave structure in the boundary to the interface between rim and spoke structure in order to allow to fix both part components by fixing means. The arrangement of the fixing means is described in the second mode.

### [Fixation of the rim to the spoke structure]

The rim and the spoke structure are fixed together. In the above-mentioned first mode, the rim is directly injection molded on to the spoke structure. This first mode already provides a basic fixation of both component parts which, however, is usually not sufficient. Accordingly, also in this first mode additional fixation means are necessary to improve the connection of the rim and the spokes structure. There are 3 additional fixation means upon the depth:
(1) embedded bolts or pins on the disk before injection molding:
(2) anchor holes on disk before injection molding; and
(3) porous surface on disk and embedded bolts or pins before injection molding.

In a preferred embodiment, in the first mode, the fixing means (1) are preferably bolts, pins, and screws; in particular flat head bolts, flat head pins or flat head screws. The fixing means (1) are embedded on the spoke structure before injection molding. At the injection molding, the fixing means are filed with the rim material (= fibre reinforced plastic material) being prepared by injection molding. The use of the fixing means in the spoke structure and corresponding fittings in the rim structures improves the adhesion of rim and spoke structure without the risk of losing, separation and pulling out, even under the heavy pressure of high speed rotation of wheel during driving.

In the first mode, the hybrid wheel according to the present invention may comprise in the spoke structure one or more anchor holes as the fixing means (2) in the boundary to the rim. These anchor holes are filed with fitting structures of the rim material (= fibre reinforced plastic material) being prepared by injection molding. The use of anchor holes in the spoke structure and corresponding fittings in the rim structures improves the adhesion of rim and spoke structure.

The anchor holes can be provided in the spoke structure in any geometry, but preferably the anchor holes are arranged angularly with regard to interface between the rim and the spoke structure. In this arrangement, the angle of the anchor holes between the centre lines of the anchor holes and the adjacent surface of the spoke structure is usually between 40 and 80°, preferably 35 to 75°, more preferably 40 to 70°. The use of several anchor holes with different angels is also possible.

The anchor holes usually have a diameter of from 2 to 15 mm, preferably 3 to 12 mm, more preferably 5 to 10 mm. The use of several anchor holes with different diameters is also possible.

Moreover, the anchor holes usually have a depth of from 2 to 15 mm, preferably 3 to 12 mm, more preferably 5 to 10 mm. The use of several anchor holes with different depth is also possible.

In order to improve the adhesion between the rim and the spoke structure, it is preferred that the spoke structure comprises a porous surface as fixing means (3) at the interphase to the rim. The porous surface of the spokes structure is prepared preferably by a surface-finishing treatment of the spokes structure.

Furthermore, it is preferred that the porous structure has a porous surface with open spaces, holes and tendrils with diameters of from 10 to 200 nm, preferably 15 to 150 nm, more preferably 20 to 100 nm.

In case an aluminium spoke structure is used, the surface treatment can be carried out by dipping the surface into an erosive suspension or erosive aqueous solution of Mg(OH)₂.

Moreover, the porous surface as the fixing means (3) of the spoke structure has a roughness which is sufficient that the fibre reinforced plastic material can penetrate into the porous surface by injection molding. This porous surface can be applied also on the surface of fixing means (1) like bolts, pin and screws; in particular flat head bolts, flat head pins or flat head screws. which is embedded on the disc before injection molding.

By such a constitution of the spoke structure, the adhesion of the rim to the spoke structure can be improved. Moreover, the additional use of a glue between the rim and the spoke structure can be avoided. The use of a glue is usually of a disadvantage because of the different materials used for the rim and the spoke structure and the resulting inaccurate shape of the glue interface. Furthermore, the production costs for a glue interface are higher.

Moreover, the fixing means can be completely hided by the plastic material of the rim. Thus, the present invention also relates to a hybrid wheel in which the fixing means are covered full by the fibre reinforced plastic material. This arrangement allows an improved security by no-accessible, since the fixing means cannot be lost by a simple manipulation.

In the above-mentioned second mode, the rim and the spoke structure are mounted together in a further separate step. In this mode, it is necessary to fix both component parts by fixing means. In this second mode, the fixing means to connect the rim and the spoke structure are bolts. There are basically two configurations available to fix the rim with the spokes structure.

In the first configuration, the fixing means are arranged in bolt holes provided in the rim and in bolt slots provided in the spoke structure. The bolt is inserted in the bolt slot and the bolt is fed through the bolt hole in the rim and fixed by a locknut. In this case, the locknut is fixed from the direction of the rim.

In this first configuration, the spoke structure comprises the bolt slots at the interface between the rim and the spoke structure in order to fix both component parts.

The bolt slots in the spoke structure are usually vertically open to allow the introduction of the fixing means, such as bolts, in axial direction into the bolt slots. By such a constitution, the bolts can be simply dropped into the spoke structure which allows an easier construction.

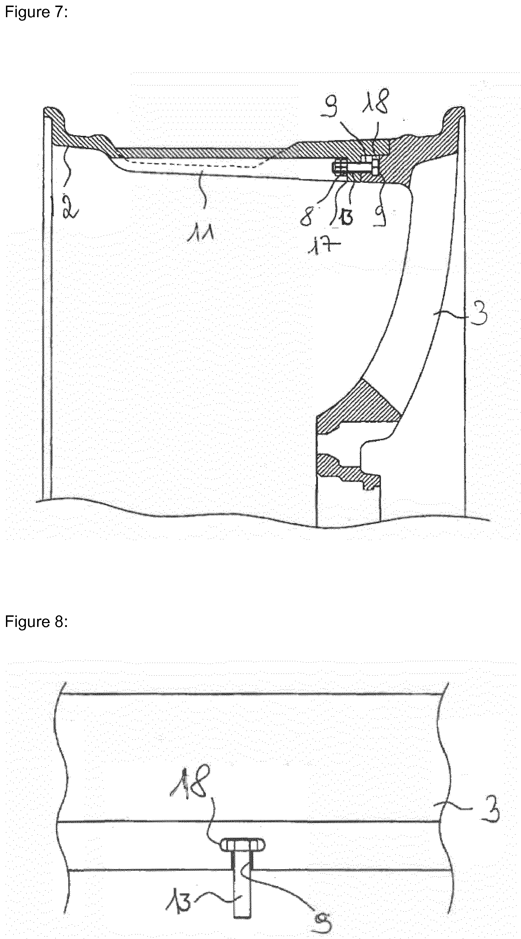

After both component parts are fixed together in this first configuration, the hybrid wheel comprises a bolt as fixing means being inserted in the bolt holes and bolt slots. In order to fix the bolts by a locknut, the rim structure comprises a concave side as described later in the figure description and shown in the figures. By using this concave side, it is easy to fix or and fix the bolts. Moreover, in case the locknut is lost during driving, the locknut will not destroy the tire. The reason for this is that the tire is provided on the opposite side of the concave side of the rim structure where the locknut is fixed. The specific constitution of the concave side of the rim is shown in detail in figure 7 described below.

In the second configuration, the fixing means are arranged in bolt holes (nut holes) provided in the spoke structure and in bolt slots provided in the rim. The above-mentioned constitution of the bolt holes and bolt slots described for the first configuration are also valid for the second configuration.

In both configurations, the bolt slots are provided in such a way that the inserted bolt does not move or rotate during the use of the wheel.

In this case, the fixing means can be completely or at least partially hided by the plastic material of the rim. Thus, the present invention also relates to a hybrid wheel in which the fixing means are covered partially or full by the fibre reinforced plastic material. The hybrid wheel according to the present invention exhibits a front side and a back side and the fixing means in both configurations are not accessible from the front side of the hybrid wheel. This arrangement allows an improved security since the fixing means cannot be loosen by a simple manipulation.

### [Spoke structure]

The hybrid wheel according to the present invention is composed of an outer diameter ring, an inner diameter ring and spokes which connect the outer and the inner ring.

The spoke structure (3) is preferably prepared from aluminium, titanium, steel, magnesium or alloys thereof (in particular aluminium alloys or titanium alloys).

### [Fibre reinforced material]

The fibre reinforced plastic material used in the hybrid wheel according to the present for the rim comprises preferably glass and/or carbon fibres.

Moreover, the fibre reinforced plastic material preferably comprises glass fibres and/or carbon fibres with a length below 20 mm.

Furthermore, the fibre reinforced plastic material used for the rim in the hybrid wheel according to the present invention preferably comprises a polymeric binder. The fibre reinforced plastic material more preferably comprises a thermoplastic resin, more preferably a polycarbonate binder.

The reinforced plastic material used is usually prepared by blending the fibre along with the polymeric binder before injection molding.

For example, a respective reinforced fibre plastic material can be made of carbon fiber (2 to 30 wt.-%), glass fibres (2 to 30 wt.-%) and Nylon (around 50 wt.-%).

### [Method for the production of the hybrid wheel]

Moreover, the present invention relates to a method for the production of the hybrid wheel described above. In this method according to the present invention, the rim is formed from the fibre reinforced plastic material by the step of injection molding.

The claimed method can be carried out by two different modes:

### [First Mode: Injection molding of the rim onto the spoke structure]

In case of the first mode for the production of the hybrid wheel according to the present invention, the fixing means can be provided on the spoke structure before the rim is provided by injection molding onto the spoke structure. In this case, the fixing means can be completely hided by the plastic material of the rim. Thus, the method for the production of the hybrid wheel comprises the following steps:
(I.1) producing of a spoke structure comprised of a metal material;
(I.2) producing of a rim out of a fibre reinforced material by injection molding directly onto the spoke structure
to produce the hybrid wheel.

In order to improve the connection of the rim and the spokes structure, and to hide the fixing means, it is further recommend introducing the fixing means after step (I.1) and before step (I.2). Thus, the method preferably comprises the following additional step (I.1a) between (I.1) and (I.2):
(I.1a) inserting fixing means into the spoke structure which are then connected and covered fully by the fibre reinforced material used for producing the rim by injection molding.

In this first mode, the spoke structure is usually set into a mold (injection mold) and the rim is formed onto the spoke structure (disk) by injection molding.

In case the fixing means, such as bolts, anchor holes and porous surface are provided in the spoke structure before injection molding, the rim and the spoke structure are fixed firmly.

Moreover, it is possible to use bolts as fixing means which are inserted into bolt slots or it is possible to use screws or pins as fixing means which are embedded on the spoke structure.

After the injection molding process, the hybrid wheel is taken out of the mold.

In both mode, the fixing means are provided in such a way that the inserted bolt does not move or rotate during the use of the wheel. Moreover, first mode allows a positively structure so that neither water, nor dust can enter the hybrid wheel between the rim and the spoke structure avoiding the formation of corrosion.

In case fixing means, such as bolts or screws, are used, these fixing means can have a porous surface as described before (for the spoke structure) to improve fixation.

The injection molding technology avoids the disadvantage of the PREPREG technology in nationally mentioned.

### [Second Mode: Separate forming of the rim and spoke structure]

In the second mode, the rim is produced separately by injection molding. Moreover, the spoke structure being composed of a metal material is also produced separately. Both component parts are then mounted together.

Thus, in the second mode, the present invention relates to a method for the preparation of a hybrid wheel, wherein the following production steps are carried out:
(II.1) producing of a spoke structure comprised of a metal material;
(II.2) molding of a rim out of a fibre reinforced material by injection molding; and
(II.3) assembling the spoke structure and the rim
to produce a hybrid wheel.

The hybrid wheel thus prepared according to the second mode has preferably some or all properties of the hybrid wheel described above.

In order to fix the rim to the spokes structure, fixing means are used. Thus, the method according to second mode comprises - as a further process step - a step of
(II.4) fixing the rim and the spoke structure by fixing means.

In a preferred embodiment, the fixing means to connect the rim and the spoke structure are bolts.

The bolts to be used to fix the rim 2 and the spoke structure 3 must have enough strength against a force to be pulled out of the component parts.

As already mentioned, there are basically two configurations available to fix the rim with the spokes structure.

In the first configuration, the production step (II.4) is carried out by providing the fixing means in bolt holes in the rim and in bolt slots in the spoke structure. Thereby, the bolt is inserted in the bolt slot of the spoke structure and the bolt is fed through the bolt hole in the rim and fixed by a locknut. In this case, the locknut is fixed from the direction of the rim.

In this first configuration, the spoke structure comprises the bolt slots at the interface between the rim and the spoke structure in order to fix both component parts.

The bolt slots in the spoke structure are usually vertically open to allow the introduction of the fixing means in axial direction into the bolt slots.

After both component parts are fixed together in this first configuration, the hybrid wheel comprises a bolt as fixing means being inserted in the bolt holes and bolt slots. In the second configuration, the fixing means are arranged in bolt holes (nut holes) provided in the spoke structure and in bolt slots provided in the rim. In the second configuration, the production step (II.4) is carried out by providing the fixing means in bolt holes in the spoke structure and in bolt slots in the rim. Thereby, the bolt is inserted in the bolt slot of the rim and the bolt is fed through the bolt hole in the spoke structure and fixed by a locknut. In this case, the locknut is fixed from the direction of the spoke structure.

The above-mentioned constitutions of the bolt holes and bolt slots described for the first configuration are also valid for the second configuration.

The fixing means can be provided in a concave area below the rim opposite of the tyre or above the rim on the side of the tyre.

Moreover, the way of hiding the fixing means between the rim and the spoke structure can also be applied by using the Prepreg technique, RTM technique (resin transfer molding), LFT-D technique (direct long fiber thermoplastic molding process) or any fiber reinforcing forming without depending on material and manufacturing method and is a separate subject-matter of the present application.

In both configurations, double lock nuts are used preferably to ensure is sufficient fixing.

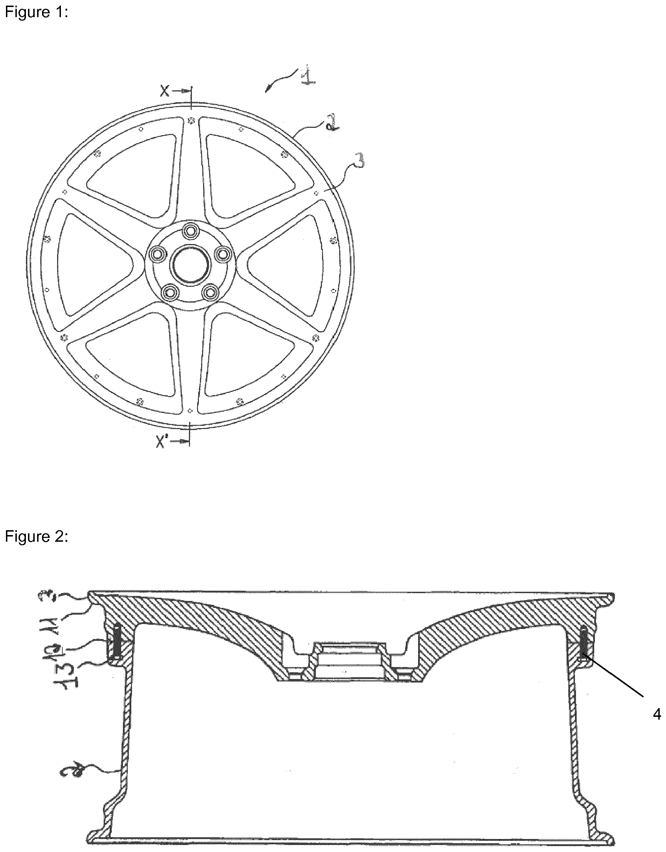

The present invention will now by described in more detail by reference to figures 1 to 9, whereby the following reference numbers are used in the figures:
- 1:: Hybrid wheel
- 2:: rim
- 3:: spoke structure
- 4:: fixing means
- 5:: front side of the hybrid wheel 1
- 6:: back side of the hybrid wheel 1
- 7:: anchor hole
- 8:: bolt hole in the rim 2
- 9:: bolt slot in the spoke structure 3
- 10:: concave structure of the rim 1
- 11:: convex part of the rim 2
- 12:: connection part between the rim 2 and the spoke structure 3
- 13:: bolt
- 14:: mold
- 15:: voids
- 16:: porous structures
- 17:: pillar step
- 18:: vertical opening of the bolt slot 9

**Figure 1** shows a whole hybrid wheel 1 according to the present invention in the front view. The hybrid wheel according to the present invention can be used for automobiles, lorries and any other vehicle. The hybrid wheel 1 consists of a rim 2 and a spoke structure 3. The rim 2 is prepared by injection molding from a fibre reinforced plastic material, whereas the spoke structure is comprised of a metal material. The rim 2 has a substantially cylindrical shape and the tire is put onto the rim outside of the hybrid wheel 1. The hybrid wheel is fixed to a vehicle axle by bolts being inserted in the holes in the middle of the spoke structure 3. One of the cylindrical end of the rim 2 is fixed to the spoke structure 3 of the hybrid wheel 1.
**Figure 2** shows a cross section of the hybrid wheel 1 according to Figure 1. The spoke structure 3 has a convex part 11 protruding to the rim 2. Figure 2 also shows the connection part 12 between the rim 2 and the spoke structure 3. The hybrid wheel 1 comprises a bolt 13 inserted to additionally fix the rim 2 to the spoke structure 3. The hybrid wheel in this figure is produced by a direct injection molding of the rim onto the spoke structure. The bolt 13 is completely enclosed in the reinforced fibre plastic material constituting the rim 2. The tire is arranged on rim 2 and extends from the end of the rim 2 towards the spoke structure 3.

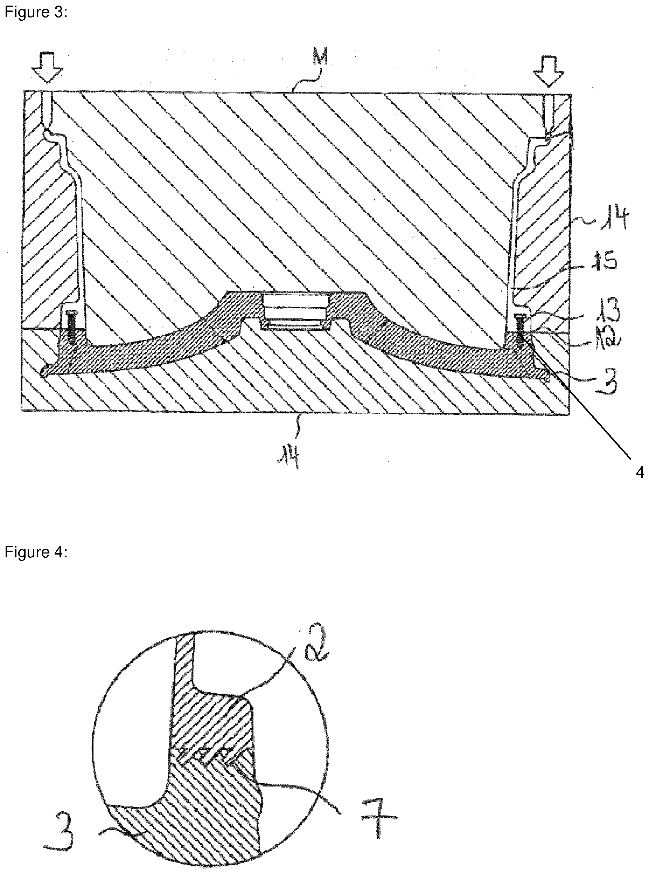

**Figure 3** shows a mold 14 into which the spoke structure 3 composed of a metal material is set. The reinforced fibre plastic material is then injected by pressure into the voids 15 of the mold 14 and flows into the direction of the spoke structure 3 by creating the connection part 12 between the rim 2 and the spoke structure 3. The spoke structure 3 comprises a bolt 13 before injection molding which is covered by the reinforced fibre plastic material after injection molding. From the arrows, the reinforced fibre plastic material is injected into the mold by pressure. Based on the fact that the bolt 13 is fully covered by the plastic material, the structure prevents the slipping off of the spoke structure 3 from the rim 2 in case shearing forces are applied to the hybrid wheel. Moreover, the bolts 13 are hided inside the wheel structure.
**Figure 4** shows the anchor holes 7 in the connection part 12 between the rim 2 and the spoke structure 3. The end face of the spoke structure 3 in this connection part 12 has several anchor holes 7 and in case the reinforced fibre plastic material is injected into the mold 14, said plastic material of the rim 2 flows into the anchor holes 7 of the spoke structure 3. The anchor holes 7 functions like the bolts 13 and improves the fixation of the rim 2 to the spoke structure 3. The anchor holes 7 are provided in the spoke structure 3 before the reinforced fibre plastic material is injected. The anchor holes 7 are prepared in the spoke structure 3 before injection molding.

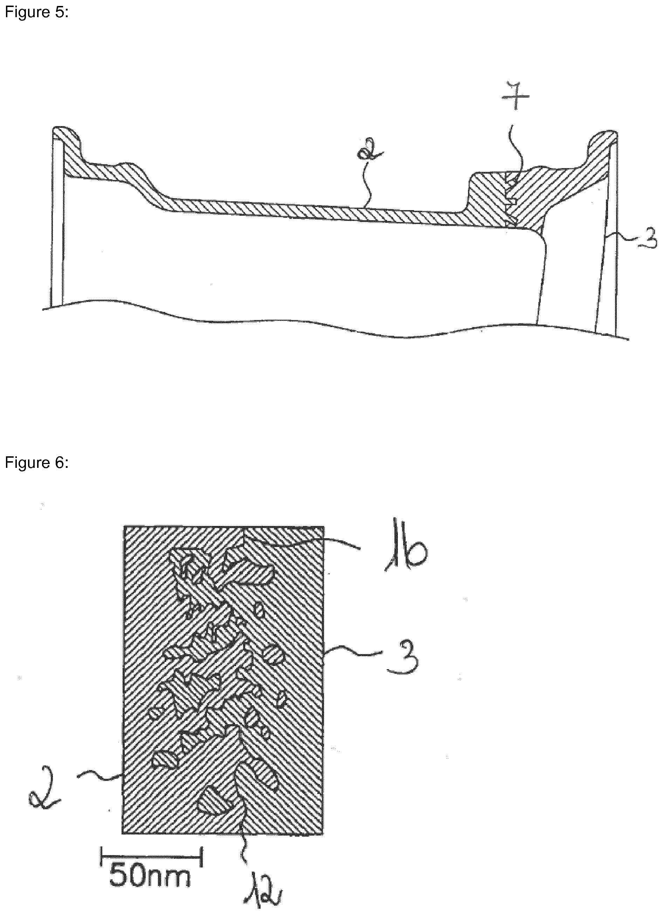

**Figure 5** shows a rim 2 bonded to a spoke structure 3, whereby the different anchor holes 7 at the connection part 12 between the rim 2 and the spoke structure 3 have different angles between the centre lines of the anchor holes 7 and the adjacent surface of the spoke structure 3.
**Figure 6** once again shows the connection part 12 between the rim 2 and the spoke structure 3, whereby the surface of the spoke structure 3 is provided with a surface finishing in order to raise the roughness of the surface of the spoke structure 3. By this nano finishing technology porous structures 15 in the spoke structure 3 are created into which the reinforced fibre plastic material flows.
**Figure 7** shows a part of the hybrid wheel 1 according to the present invention in which the rim 2 is fixed to the spoke structure 3 by a bolt 13. In this embodiment, both rim 2 and spoke structure 3 are prepared separately and fixed thereafter. The rim 2 comprises a bolt hole 8 and the spoke structure 3 comprises a bolt slot 9 into which the head of the bolt 13 is inserted. The rim 2 comprises a pillar step 17 and the bolt slot 9 comprises a vertical opening to introduce the bolt into the spoke structure 3. The hole in the rim 2 is prepared directly during the injection molding process. Therefore, there is no need for drilling the hole later in the rim 2 which might cause defects and cracks in the rim 2. Moreover, the process of drilling the rim 2 creates an unevenness of the rim 2 which might prevent proper fixing later. The convex part 11 of the rim 2 allows an easy fixing of the bolt 13. The convex part 11 starts from the end of the pillar step 17 towards the inside of the car (opposite side of the spoke structure 3).

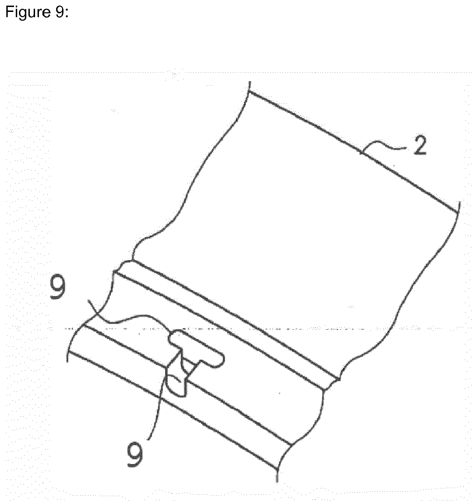

**Figures 8** **and** **9** show the_spoke structure 3 with a bolt 13. This figure also shows the vertical opening 18 and the bolt slot 9. Figure 9 shows the bolt slot 9 from oblique direction view. Into the bolt slot 9, the head of the bolt 13 is inserted. The side view of the bolt slot 9 has a T-shape with a slightly bigger size than the bolt 13.

## Claims

1. A hybrid wheel (1), comprising a rim (2) and a spoke structure (3) connected thereto, whereby the rim (2) is made out of a fibre reinforced plastic material and the spoke structure (3) is made out of a metal,
**characterized in that**,
the rim is formed from the fibre reinforced plastic material by injection molding.

2. The hybrid wheel (1) according to claim 1, **characterized in that** the rim (2) is formed by injection molding on the spoke structure (3).

3. The hybrid wheel (1) according to claim 2, **characterized in that** the rim (2) is formed on the spoke structure (3), whereby fixing means (4) between the rim (2) and the spoke structure (3) are provided during injection molding.

4. The hybrid wheel (1) according to claim 2 or 3, **characterized in that** the spoke structure (3) comprises one or more anchor holes (7) in the boundary to the rim (2) and the fibre reinforced plastic material is inserted into the anchor holes by the injection molding.

5. The hybrid wheel (1) according to anyone of claims 2 to 4, **characterized in that** the spoke structure (3) comprises a porous surface at the interphase to the rim (2) and the fibre reinforced plastic material protrudes into the porous surface.

6. The hybrid wheel (1) according to claim 1, **characterized in that** the hybrid wheel (1) has fixing means (4), in particular bolts, inserted in holes (8) provided in the rim (2) and in bolt slots (9) provided in the spoke structure

7. The hybrid wheel (1) according to claim 6, **characterized in that** the rim (2) exhibits a concave structure (10) in the boundary to the interface between rim (2) and spoke structure (3) in order to allow to fix the fixing means (4).

8. The hybrid wheel (1) according to claim 6, **characterized in that** a slot (9) is provided to set the head of the fixing means (4), in particular the bolt, on the spoke structure (3) when the fixing means (4), in particular the bolt, is inserted into the slot (9), whereby the shape of the slot (9) is the same shape as the head of the fixing means (4), in particular a hexagon shape, to avoid rotation.

9. The hybrid wheel (1) according to claim 6, **characterized in that** the fibre reinforced plastic material contains fibers with a length under 20 mm.

10. The hybrid wheel (1) according to anyone of claims 1 to 9, **characterized in that** the rim (2) and the spoke structure (3) are positively connected by the injection molding and/or fixed together by fixing means (4).

11. A method for the production of a hybrid wheel (1), comprising a rim (2) and a spoke structure (3) connected thereto, whereby the rim (2) is made out of a fibre reinforced plastic material and the spoke structure (3) is made out of a metal,
**characterized in that**,
the rim is formed from the fibre reinforced plastic material by injection molding.

12. The method according to claim 11, **characterized in that** the rim (2) is prepared separately from the spoke structure (3) by injection molding and the rim (2) is then mounted to the spoke structure (3).

13. The method according to claim 11, **characterized in that** the rim (2) is mounted by injection molding directly to the spoke structure (3).

14. The method according to claim 13, **characterized in that** fixing means (4) to fix the rim (2) and the spoke structure (3) are provided before injection molding.

15. The method according to anyone of claims 11 to 14, **characterized in that** the rim (2) is fixed to the spoke structure (3) by fixing means (4).
